(19) **Europäisches Patentamt**
**European Patent Office**
**Office européen des brevets**

(11) **EP 4 280 583 B1**

(12) **EUROPEAN PATENT SPECIFICATION**

(45) Date of publication and mention
of the grant of the patent:
**24.12.2025 Bulletin 2025/52**

(21) Application number: **23173903.8**

(22) Date of filing: **17.05.2023**

(51) International Patent Classification (IPC):
*H04M 9/08* *(2006.01)*

(52) Cooperative Patent Classification (CPC):
**H04M 9/082**

(54) **APPARATUS, METHODS AND COMPUTER PROGRAMS FOR PERFORMING ACOUSTIC ECHO CANCELLATION**

VORRICHTUNG, VERFAHREN UND COMPUTERPROGRAMME ZUR DURCHFÜHRUNG VON AKUSTISCHER ECHOLÖSCHUNG

APPAREIL, PROCÉDÉS ET PROGRAMMES INFORMATIQUES PERMETTANT D'EFFECTUER UNE ANNULATION D'ÉCHO ACOUSTIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **18.05.2022 US 202217747110**

(43) Date of publication of application:
**22.11.2023 Bulletin 2023/47**

(73) Proprietor: **Nokia Technologies Oy**
**02610 Espoo (FI)**

(72) Inventors:
• **NUZMAN, Carl**
**NJ, 07083 (US)**
• **JALALI, Shirin**
**NJ, 07922 (US)**

(74) Representative: **Page White Farrer**
**Bedford House**
**21a John Street**
**London WC1N 2BF (GB)**

(56) References cited:
**US-A1- 2006 018 459     US-A1- 2010 057 454**

**Description**

TECHNICAL FIELD

Exemplary embodiments herein relate generally to Acoustic Echo Cancellation (AEC) and, more specifically, relate to processes and apparatus for performing the AEC possibly using Maximum Likelihood (ML) techniques.

BACKGROUND

In a two-way audio system, there is often a "far end" and a "near-end". Consider a person in one room speaking to a colleague in a different location via a video conference. The room is considered to be the "near-end" (relative to the person) and the location with the colleague is considered to be the "far end".

Any two-way audio system in which speakers and microphones are not physically isolated (e.g., speakerphone or conference room) in the near-end requires echo cancellation to prevent the far-end signal produced by the speakers from feeding back to the far end via the microphones. Such systems are in wide use already today, but new use cases involving spatial audio and immersive experience make the technical problem more challenging.

Desirable properties of an audio echo cancellation system include one or more of the following:

1) an ability to track a rapidly changing physical environment even if the far-end signal is strongly correlated;
2) a very low residual echo after convergence;
3) robustness to the presence of intermittent, strong near-end signals; and
4) acceptable complexity (e.g., linear in the length of the cancellation filter).

US 2006/018459, discloses a hands-free phone with voice activity detection using a comparison of frame power estimate with an adaptive frame noise power estimate, automatic gain control with fast adaptation and minimal speech distortion, echo cancellation updated in the frequency domain with stepsize optimization and smoothed spectral whitening, and echo suppression with adaptive talking-state transitions.

US 2010/057454 discloses an echo canceller for improved recognition and removal of an echo from a communication device. The echo canceller can dynamically reduce echo using an improved energy estimator and an improved adaptive filter. The improved energy estimator can determine if conversation is in a single talk period or a double talk period based on the combined energy of both the near end background noise and speech. The improved adaptive filter can reduce echo by dynamically changing adaptation speed or step size. In double talk, the adaptive filter(s) can dynamically slow-down or stop adaptation. In single talk, the filter can dynamically increase the speed of adaptation to improve accuracy, or decrease adaptation speed for stability.

BRIEF SUMMARY

According to a first aspect there is provided a method as indicated in claim 1.

According to a second aspect there is provided an apparatus as indicated in claim 4.

BRIEF DESCRIPTION OF THE DRAWINGS

In the attached Drawing Figures:

FIG. 1 is a block diagram of an exemplary typical audio system with echo cancellation;
FIG. 1A is a block diagram of a communication device suitable for implementing echo cancellation in accordance with an exemplary embodiment;
FIG. 2 is a logic flow diagram of a first embodiment;
FIG. 3, which is a logic flow diagram for acoustic echo cancellation using a control parameter and different maximum likelihood schemes;
FIG. 4, split into FIG.4(a) and FIG. 4(b), shows the progress of the relative misalignment error as a function of time for some example scenarios., wherein FIG. 4(a) illustrates input SNR that is 30 dB and FIG. 4(b) illustrates input SNR that is 50 dB;
FIG. 5 shows relative misalignment as a function of time for P-NLMS, IML, and P-IML algorithms; and
FIG. 6, split into FIGS. 6(a) and 6(b), illustrate relative misalignment as a function of time in an echo cancellation system with two loudspeakers and one microphone, and with unequal loudspeaker signal powers, where FIG. 6(a) uses IML, and FIG. 6(b) uses MS-IML.

DETAILED DESCRIPTION OF THE DRAWINGS

Abbreviations that may be found in the specification and/or the drawing figures are defined below, at the end of the detailed description section.

The word "exemplary" is used herein to mean "serving as an example, instance, or illustration." Any embodiment described herein as "exemplary" is not necessarily to be construed as preferred or advantageous over other embodiments. All of the embodiments described in this Detailed Description are exemplary embodiments provided to enable persons skilled in the art to make or use the invention and not to limit the scope of the invention which is defined by the claims.

As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

For the application of systems such as 5G immersive voice, it is desirable to leverage multiple speakers and multiple microphones to provide a more realistic audio experience. For example, comprehension can be enhanced by making different remote voices appear to come from different directions.

Exploiting multiple speakers and microphones in large and dynamic physical environments makes the problem of acoustic echo cancellation more challenging, for several reasons:

1) multiple speakers increase the correlation of the far-end signal, slowing convergence;
2) multiple microphones add to computational complexity;
3) a large physical environment adds to the required length of the cancellation filter; and/or
4) a dynamic physical environment increases the required tracking speed of the system.

To enable immersive voice applications, it would be useful to have an echo cancellation method that can simultaneously and automatically achieve rapid tracking, low residual echo, robustness to near-end signals, and low complexity.

For the generic problem of acoustic echo cancellation, there are numerous algorithms. Three key algorithms for adapting the coefficients of an acoustic echo cancellation filter include Least Mean Square (LMS), Recursive Least Square (RLS), and Affine Projection Algorithm (APA). While all of these can be useful, they have the following limitations, which the techniques presented herein seek to address.

1) LMS has poor convergence especially in the face of correlated far-end signals.
2) RLS has excellent performance but quadratic complexity in the filter length.
3) APA has fast convergence but relatively high residual echo after convergence.

These shortcomings were addressed in U.S. Patent Application Serial Number 17/393,904, by inventors Carl Jeremy Nuzman and Shirin Jalali, filed on August 4, 2021, which implements AEC using, e.g., an Incremental Maximum Likelihood (IML) algorithm. This algorithm takes a form similar to an APA, but with e.g., the matrix inverse replaced by a regularized matrix inverse. The IML algorithm may have a parameter, called a control parameter and in exemplary embodiments a confidence parameter, that controls the degree of regularization in the inverse. When the confidence parameter is set (e.g., approximately) equal to the ratio of misalignment to noise, the IML update algorithm achieves low complexity, fast convergence, and low residual echo after convergence as desired.

The Incremental Maximum Likelihood (IML) algorithm is described below. First, a typical audio system is described, then the IML algorithm is described.

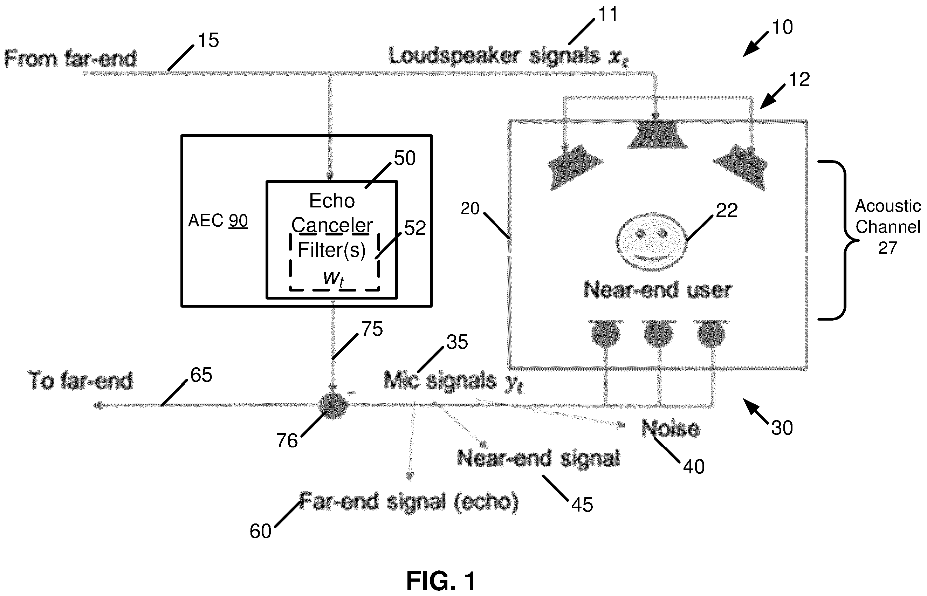

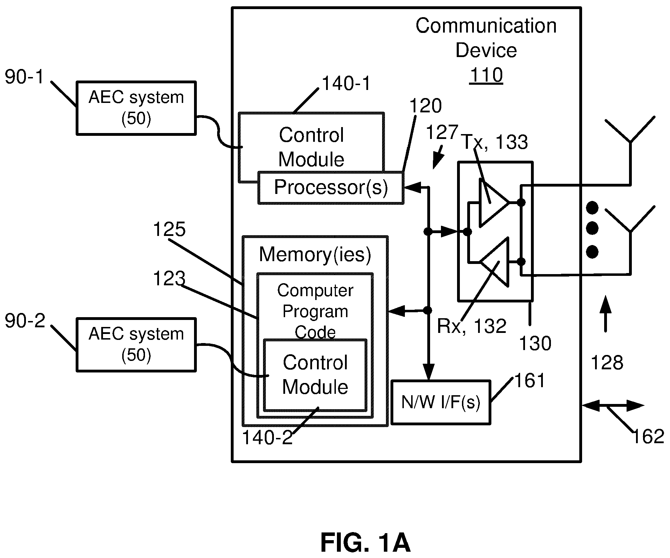

Consider the setup shown in FIG. 1. FIG. 1 is a block diagram of an exemplary typical audio system with echo cancellation. There is a signal 15 from the far end and a signal 65 to the far end. The audio system 10 comprises the loudspeaker array 12 (having three speakers in this example), a microphone array 30 (having three microphones in this example), the Acoustic Echo Canceller (AEC) system 90, and an adder 76. The AEC system 90 in this example includes an echo canceler 50 with one or more filters 52 having coefficients $w_t$.

The arrays 12 and 30 may have from one element to many elements, and the numbers of elements of each of the arrays 12, 30 need not be the same. The reference 12 may be used to refer to the loudspeaker array 12, or shortened a single loudspeaker 12 or multiple loudspeakers 12. Similarly, the reference 30 may be used to refer to the microphone array 30 or shortened to a single microphone 30 or multiple microphones 30.

The signal 15 from the far end comprises loudspeaker signals $x_t$ 11, and the microphone (mic) signals $y_t$ 35 comprise noise signals 40, a near-end signal 45, and a received far end signal 60 referred to as echo. In this example, the environment for the system 10 is within a room 20 and the near-end signal 45 is created at least by a near-end audio source, such as a near-end user 22. There is an acoustic channel 27 through which sound from the loudspeakers 12 travels to the microphones 30. It is noted that an acoustic channel is treated herein as a dual concept, encompassing both a physical representation (e.g., the physical channel through which sound travels) and a corresponding mathematic representation (e.g., a matrix of weights describing the physical channel through which sound travels).

The echo canceler 50 and its filter(s) 52, using and applying the coefficients $w_t$, produces an echo estimate 75 that is subtracted by the adder 76 from the microphone signals 35 to create the echo cancelation output $e_t$ 65.

FIG. 1A is a block diagram of a communication device 110 suitable for implementing echo cancellation in accordance with an exemplary embodiment. One nonlimiting example of a communication device 110 is a wireless, typically mobile device that can access a wireless network. The communication device 110 includes one or more processors 120, one or more memories 125, one or more transceivers 130, and one or more network (N/W) interfaces (IF(s)) 161, interconnected through one or more buses 127. Each of the one or more transceivers 130 includes a receiver, Rx, 132 and a transmitter, Tx, 133. The one or more buses 127 may be address, data, or control buses, and may include any interconnection mechanism, such as a series of lines on a motherboard or integrated circuit, fiber optics or other optical communication equipment, and the like.

The communication device 110 may be wired, wireless, or both. For wireless communication, the one or more transceivers 130 are connected to one or more antennas 128. The one or more memories 125 include computer program code 123. The N/W I/F(s) communicate via one or more wired links 162.

The communication device 110 includes a control module 140, comprising one of or both parts 140-1 and/or 140-2, which may be implemented in a number of ways. The control module 140 may be implemented in hardware as control module 140-1, such as being implemented as part of the one or more processors 120. The control module 140-1 may be implemented also as an integrated circuit or through other hardware such as a programmable gate array. In another example, the control module 140 may be implemented as control module 140-2, which is implemented as computer program code 123 and is executed by the one or more processors 120. For instance, the one or more memories 125 and the computer program code 123 may be configured to, with the one or more processors 120, cause the user equipment 110 to perform one or more of the operations as described herein. The AEC system 90 may be similarly implemented as echo canceler module 90-1 as part of control module 140-1, as echo canceler module 59-2 as part of control module 140-2. The AEC system 90 typically includes the echo canceler 50.

The computer readable memories 125 may be of any type suitable to the local technical environment and may be implemented using any suitable data storage technology, such as semiconductor-based memory devices, flash memory, firmware, magnetic memory devices and systems, optical memory devices and systems, fixed memory and removable memory. The computer readable memories 125 may be means for performing storage functions. The processors 120 may be of any type suitable to the local technical environment, and may include one or more of general-purpose computers, special purpose computers, microprocessors, digital signal processors (DSPs) and processors based on a multi-core processor architecture, as nonlimiting examples. The processors 120 may be means for performing functions, such as controlling the communication device 110, and other functions as described herein.

In general, the various embodiments of the communication device 110 can include, but are not limited to, cellular telephones (such as smart phones, mobile phones, cellular phones, voice over Internet Protocol (IP) (VoIP) phones, and/or wireless local loop phones), tablets, portable computers, room audio equipment, immersive audio equipment, vehicles or vehicle-mounted devices for, e.g., wireless V2X (vehicle-to-everything) communication, image capture devices such as digital cameras, gaming devices, music storage and playback appliances, Internet appliances (including Internet of Things, IoT, devices), IoT devices with sensors and/or actuators for, e.g., automation applications, as well as portable units or terminals that incorporate combinations of such functions, laptops, laptop-embedded equipment (LEE), laptop-mounted equipment (LME), Universal Serial Bus (USB) dongles, smart devices, wireless customer-premises equipment (CPE), an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. That is, the communication device 110 could be any device that may be capable of wireless or wired communication.

Now that a typical audio system has been described, further details about the IML algorithm are described. Assume that there is a single loudspeaker (in array 12) and a single microphone (in array 30). The algorithm generalizes to the case of multiple loudspeakers and/or multiple microphones in a straightforward fashion. At time t, the echo canceler 50, with filter length L in its filter(s) 52, receives as input the following:

1) A latest loudspeaker signal vector: $xt = [x_t, ..., x_{t-L+1}]^T \in R^L$, wherein $L$ is the number of coefficients in $w_t$ and $R$ is a set of real vectors of length $L$.
2) A latest microphone measurement: $y_t \in R$.
3) $P$ - 1 previous loudspeaker and microphone measurements: $(x_{t'}, y_{t'})$ for $t' = t - 1, ... , t - P + 1$.
4) A current estimate of echo channel's coefficients $w_t$.

It is now described how the IML updates $\boldsymbol{w_t}$ as a function of its inputs.

Define $L \times P$ matrix $X_t = [\boldsymbol{x_t}, ..., \boldsymbol{x_{t-P+1}}]$ and $P \times 1$ vector $Y_t = \begin{bmatrix} y_t \\ \vdots \\ y_{t-P+1} \end{bmatrix}$. Also, define $L \times (P-1)$ matrix $U_{t-1} = [\boldsymbol{x_{t-1}}, ..., \boldsymbol{x_{t-P+1}}]$. (Note that $U_{t-1}$ is $X_t$ without the first column.)

Given confidence parameter $ct$, define a normalization factor parameter as the following:

$$\alpha_t = (||\boldsymbol{x_t}||^2 + c_t^{-1} - \boldsymbol{x_t^T} U_{t-1}(c_t^{-1} I_{P-1} + U_{t-1}^T U_{t-1})^{-1} U_{t-1}^T \boldsymbol{x_t})^{-1}.$$

Then, IML updates the coefficients $w_t$ as the following:

$$\boldsymbol{w_{t+1}} = \boldsymbol{w_t} + \alpha_t(I_L - U_{t-1}(U_{t-1}^T U_{t-1} + c_t^{-1} I_{P-1})^{-1} U_{t-1}^T)\boldsymbol{x_t}(y_t - \boldsymbol{x_t^T w_t}). \qquad \text{Eq. 1}$$

With respect to the confidence parameter (CP), the only parameter in the description of IML is the confidence parameter $ct$. First, it is described how this parameter should be set ideally. Assume that the channel between the loudspeaker and microphone can be described by $\boldsymbol{w_{OPT}} \in R^L$ and therefore,

$$y_t = \boldsymbol{x_t^T w_{OPT}} + z_t,$$

where $z_t$ denotes the near end signal, which for example may consist of the sum of a near-end - user voice signal and the additive Gaussian noise. First, consider the case where the near end signal has a steady variance $\sigma_z^2$. This can occur for example when the near-end voice user is silent. In this case, it is ideally desirable to set the parameter $c_t$ as $c_t = \frac{||w_t - w_{OPT}||^2}{L\sigma_z^2}$. Setting the parameter as such requires having access to $w_{OPT}$, which is not available. Before a practical method is explained to set parameter $ct$, two extreme cases are reviewed, which shed light on IML.

The first case relates to the following: $\frac{1}{L}||\boldsymbol{w_t} - \boldsymbol{w_{OPT}}||^2 \gg \sigma_z^2$. In this case, misalignment error $||\boldsymbol{w_t} - \boldsymbol{w_{OPT}}||$ dominates additive noise and $c_t$ should be made very large, resulting in $c_t^{-1}$ being set close to zero. This happens at the beginning of a communication session, when the echo canceller does not have a reliable estimate of the coefficients. In the extreme case of $c_t \to \infty$, one can show that IML reduces to standard APA with no regularization. More generally, in this regime $c_t^{-1}$ plays a role analogous to the regularization parameter in regularized APA.

The second case relates to the following: $\frac{1}{L}||\boldsymbol{w_t} - \boldsymbol{w_{OPT}}||^2 \ll \sigma_z^2$. In this case, the system has a high-quality estimate of the echo channel coefficients $\boldsymbol{w_{OPT}}$ and additive noise is dominant. In this case, $c_t$ is set to a small value and IML reduces to LMS with a small step size $c$.

The two extreme cases show that IML can be explained as a smart adaptive interpolation between APA and LMS, depending on the accuracy of the channel estimate and the level of noise in the measurements.

Concerning setting the confidence parameter, as mentioned earlier, ideally IML sets the parameter $c_t$ based on the power of misalignment at time t. But this is not available in practice. A practical alternative that is inspired by the ideal choice is to set $c_t$ as

$$c_t = \frac{\frac{1}{T}\sum_{t'=t-T+1}^{t}\left(x_{t'}^T w_{t'} - y_{t'}\right)^2}{\sigma_z^2}.$$

This practical choice works well in experiments.

Regarding connection of IML to MLE, to understand IML and its derivation, regularized APA (R-APA) is reviewed. R-APA updates coefficients $\boldsymbol{w_t}$ as follows:

$$\boldsymbol{w_{t+1}} = \boldsymbol{w_t} + X_t(\delta I_P + X_t^T X_t)^{-1}(Y_t - X_t^T \boldsymbol{w_t}).$$

Here, $\delta$ denotes the regularization parameter. Define $L \times L$ matrix $P_t$ as

$$P_t = I - X_t(I + X_t^T X_t)^{-1}X_t^T.$$

Starting at $w_0 = 0$, at iteration t the following occurs:

$$\boldsymbol{w}_t = \boldsymbol{w}_{OPT} + \Pi_{i=0}^{t-1}P_i\boldsymbol{w}_{OPT} + \sum_{i=0}^{t-1}\prod_{j=i+1}^{t-1} P_j X_i(\delta I_P + X_i^T X_i)^{-1} Z_i \ ,$$

where $Z_t = [z_t, ..., z_{t-P+1}]^T$. $P_t$ is a matrix with $L$ - $P$ eigenvalues equal to one and $P$ eigenvalues strictly smaller than one. This characterization shows that the bias in $\boldsymbol{w}_t$, i.e., $\Pi_{i=0}^{t-1}P_i\boldsymbol{w}_{OPT}$, converges to zero at an exponential rate. Therefore, approximately, $\boldsymbol{w}_t$ could be modeled as $N(\boldsymbol{0}_L, Mt)$, where the $L \times L$ matrix $M_t$ denotes the covariance matrix of $\boldsymbol{w}_t$. Now assuming that $\boldsymbol{w}_t \sim N(\boldsymbol{w}_o, M_t)$ and $Y_t = X_t^T \boldsymbol{w}_o + Z_t$ , the maximum likelihood estimation (MLE) of $\boldsymbol{w}_o$ is as follows:

$$\boldsymbol{w}_{t+1} = \boldsymbol{w}_t + M_t X_t(\sigma_z^2 I_P + X_t^T M_t X_t)^{-1}(Y_t - X_t^T \boldsymbol{w}_t).$$

To simplify this ML-based update rule, assume that $M_t = \sigma_w^2 I_L$ . Then, the following occurs:

$$\boldsymbol{w}_{t+1} = \boldsymbol{w}_t + X_t(\delta_{ML} I_P + X_t^T X_t)^{-1}(Y_t - X_t^T \boldsymbol{w}_t),$$

where $\delta_{ML} = \frac{\sigma_z^2}{\sigma_w^2}$ . In practice $\sigma_w^2$ can be approximated as $\frac{1}{L}\left\|\boldsymbol{w}_{OPT} - \boldsymbol{w}_t\right\|^2$ . To further improve this ML-based approach, notice that in this derivation, the past P observations have been treated equally. However, the latest observation ($\boldsymbol{x}t, yt$) is the new one that is not used in the estimation of $\boldsymbol{w}_t$. Moreover, here, it is simply assumed that $M_t$ is a diagonal matrix. To derive a yet better update rule, it is proposed to use IML, which employs MLE at two steps: first to estimate $M_t$ based on $P$-1 past observations and, second, to update $\boldsymbol{w}_t$ using the latest observation together with the derived estimate $M_t$.

One embodiment addresses robustness to near-end signal via Voice Activity Detection (VAD). In some voice-oriented applications, the near-end signal $z_t$ can be modelled as the sum $z_t = v_t + u_t$ of a background noise process vt with variance $\sigma_v^2$ and a strong near-end voice signal $u_t$, where $u_t$ is modeled as a random process that is either on or off. Various voice activity detection methods can be used to detect whether the near-end voice is on or off. In the case of hard VAD, the output of the voice activity detection module can be denoted $a_t = 1$ when voice activity is detected, and $a_t = 0$ when no voice activity is detected, where an "a" is used to indicate activity. With soft VAD, $a_t$ could take on any value between 0 (zero) and 1 (one), to reflect the estimated probability that a voice signal is active.

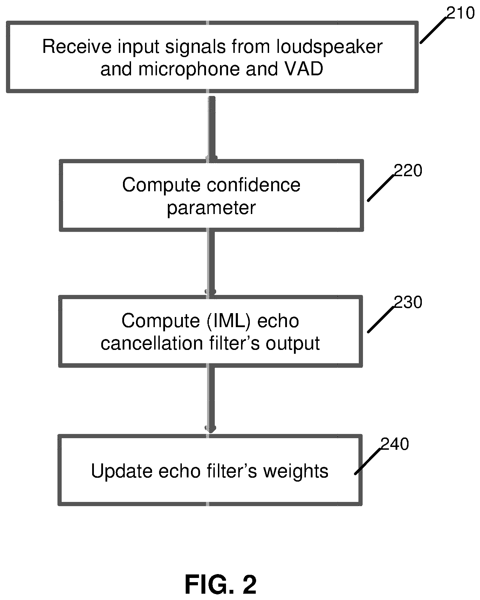

FIG. 2 is logic flow diagram of a first embodiment. FIG. 2 illustrates the operation of an exemplary method or methods, a result of execution of computer program instructions embodied on a computer readable memory, functions performed by logic implemented in hardware, and/or interconnected means for performing functions in accordance with exemplary embodiments. The blocks in FIG. 2 are assumed to be performed by a communication device 110, under control of the AEC system 90 and the control module 140.

In block 210, the communication device 110 receives input signals for the loudspeaker(s) (loudspeaker signal(s) 11 in FIG. 1), the microphone(s) (mic signal(s) 35), and VAD (via the near-end activity detection module 80).

One exemplary embodiment then works at each time step t as follows (see also FIG. 2):

The raw confidence parameter is calculated (block 220) as $\tilde{c}_t = \dfrac{\frac{1}{T}\sum_{t'=t-T+1}^{t}\left(x_{t'}^T w_{t'} - y_{t'}\right)^2}{\sigma_v^2}$ . The voice activity detection module provides the value $a_t$. The combined confidence parameter is calculated as $c_t = \tilde{c}_t(1 - a_t)$. The updated weight vector $w_{t+1}$ is calculated (block 230) via an IML update step with confidence $ct$. One example uses the convention that an update with $c_t = 0$ is interpreted as the limit of the IML update equation as $c_t \to 0$, namely an LMS update with step size zero: $w_{t+1} = w_t$. This may be performed by the adaptive weight update function 70 of FIG. 1, which may also perform the updating of the echo filter's weights in block 240. This updating modifies the response of the echo canceler 50 via the filter(s) 52 accordingly.

What was described above was certain of the IML examples in U.S. Patent Application Serial Number 17/393,904. While these examples are useful, they could be improved sometimes.

In more detail, due to the challenging nature of the 5G immersive voice echo cancellation problem, there is pressure from an engineering point of view to push the complexity of the solution as low as possible, while making the convergence speed as high as possible. Novel variations of the IML concept may be needed to achieve the best possible tradeoff in various use cases.

To address these and other issues, and as an overview, the exemplary embodiments relate to hands-free communication in mobile devices where one (or more) loudspeakers are provided in order to convey far-end sound to the near-end user, and one (or more) microphones are provided to capture near-end sound to be conveyed to the far-end user. An echo cancellation module is provided to reduce the extent to which the far-end sound propagates back to the far-end user via the chain of loudspeakers, local acoustic channel, and microphone. An adaptive mechanism for the echo cancellation module is provided that uses, e.g., a window of P past samples to update the filter coefficients in the echo cancellation module.

The exemplary embodiments include several embodiments, each with its own technical advantages.

One exemplary embodiment is a Block Maximum Likelihood (BML) update. This is an algorithm which has lower computational complexity than IML, but also in some cases, slower convergence speed. The conventional IML algorithm determines the (e.g., optimal) filter at each time t based on the filter at time t-1 and measurements from time t-1 to t-P, for some specified memory length P. In contrast, the BML algorithm only updates the filter at times of the form $t = kB$, that is, for times that are integer multiples of an integer block size $B, B \leq P$. The update is still based on measurements from time t-1 to t-P. The lowest complexity, for given $P$, is achieved by taking a block size equal to memory size, $B = P$. In scenarios with strongly correlated loudspeaker signals, the BML algorithm with large $P$ can obtain much lower computational complexity than IML while only being slightly slower in convergence.

Another exemplary embodiment is a Proportional - Incremental Maximum Likelihood (P-IML) update. Many acoustic echo impulse responses are sparse, meaning that the majority of impulse response coefficients are close to zero. There is a conventional algorithm referred to as P-NLMS (proportionate normalized least mean square) that is similar to NLMS but obtains faster convergence than NLMS when the channel impulse response is sparse. This method was described in Dutweiler, "Proportionate normalized least-mean-square adaptation in echo cancellers", IEEE Trans. Sig Proc, 2000. The core of the method in Dutweiler is to update different filter coefficients with a weight that is proportional to their magnitude. Expanding upon this by including such proportional weights into the IML update formula yields a method that has the same beneficial properties as IML, but converges even faster than IML when the echo impulse response is sparse. As is often done in the art, it can be said that an acoustic channel is sparse if the impulse response associated with that channel is sparse as defined in this paragraph.

A further exemplary embodiment is a Multi-source Incremental Maximum Likelihood (MS-IML) update. In applications with two or more loudspeakers, the original IML algorithm described in U.S. Patent Application Serial Number 17/393,904 may converge slowly if the strength of the loudspeaker signals, received at the microphone, are very different from each other. This can arise for example if the microphone is physically closer to one speaker, or if the transmitted signals themselves are not of equal power. The original IML algorithm may be further improved by a modified version of the algorithm that has a separate control parameter associated with each loudspeaker; the control parameter may be set to the residual echo-to-noise ratio associated with each loudspeaker. This modified version, referred to as the MS-IML algorithm, achieves fast convergence even in the case of multiple loudspeakers with heterogeneous received power levels. MS-IML can likewise be useful if the echo cancellation is based on filtering multiple transformed loudspeaker signals obtained by applying a linear transformation to the multiple transmitted signals, where the transformed signals have unequal power, even if the transmitted signals themselves have more or less equal power. For example, left and right stereo signals $x_L(t)$ and $x_R(t)$ are sometimes represented as sum and difference signals $x_S(t) = x_L(t) + x_R(t)$ and $x_D(t) = x_L(t) - x_R(t)$, respectively. In some stereo echo cancellation systems, the canceller may include two adaptive filters that use $x_S(t)$ and $x_D(t)$ as respective inputs, rather than including two adaptive filters that use $x_L(t)$ and $x_R(t)$ as respective inputs. It can commonly happen that the power of $x_D(t)$ is smaller than that of $x_S(t)$. In this case, MS-IML can achieve faster convergence than IML, due to power differences between $x_D(t)$ and $x_S(t)$, even when the transmitted signals $x_S(t)$ and $x_R(t)$ themselves have the same power.

It is also possible to unify all of these under a single embodiment. This is described via an XML embodiment, and is described below.

These exemplary embodiments are now described in further detail.

Before proceeding with additional details, certain of the concepts presented below are characterized in mathematical form. The following table is a reference guide to the parameters and their corresponding exemplary meanings.

| Parameter | Meaning |
|---|---|
| $\boldsymbol{x}_t$ | latest loudspeaker signal vector |
| $y_t$ | latest microphone measurement |

(continued)

| Parameter | Meaning |
|---|---|
| $L$ | filter length and channel impulse response length |
| $P - 1$ | number of previous loudspeaker and microphone measurements used in the coefficient update algorithm |
| $\boldsymbol{w}_t$ | current estimate of echo channel's coefficients (also referred to as a weight vector) |
| $\boldsymbol{w}_{t-1}$ | a previous estimate of the echo-channel's coefficients |
| $c_t$ | confidence parameter |
| $\boldsymbol{w}_{\mathrm{OPT}}$ | the (unknown) channel impulse response of length L |
| $z_t$ | near-end signal, e.g., the voice signal of the near-end user |
| $v_t$ | background noise in near-end signal |
| $f$ | function for the echo canceler that defines new echo channel coefficients $\boldsymbol{w}_t$ |
| | |
| $B$ | block size |
| $e_t$ | echo canceller output signal |
| $x_t^T w_{OPT}$ | effect of far end signal as received at the microphone |
| $\sigma_z^2$ | near-end signal power |
| $\sigma_v^2$ | background noise contribution to near-end signal power |
| $m_{t-P} = \|\boldsymbol{w}_{t-P} - \boldsymbol{w}_{\mathrm{OPT}}\|^2/L$ | misalignment |

This table is provided for ease of reference, and is not meant to be exhaustive or limiting. Also, these parameters may be referred to using other names at times.

As before, assume that there is a single loudspeaker (in array 12) and a single microphone (in array 30). The algorithm generalizes to the case of multiple loudspeakers and/or multiple microphones in a straightforward fashion. At time t, the echo canceler 50, with filter length $L$ in the filter(s) 52, receives as input the following:

1) A latest loudspeaker signal vector: $\boldsymbol{x}_t = [x_t, ..., x_{t-L+1}]^T \in R^{n_w}$, wherein $n_w$ is the number of coefficients in $\boldsymbol{w}_t$ and $R$ is a set of real vectors of length $n_w$.
2) A latest microphone measurement: $y_t \in R$.

The microphone measurement is typically modeled as $y_t = \boldsymbol{w}_{\mathrm{OPT}}^T \boldsymbol{x}_t + z_t$ where $\boldsymbol{w}_{\mathrm{OPT}}$ is the (unknown) channel impulse response of length L and $z_t$ is the (unknown) near-end signal. The echo canceller 50 is characterized by filter coefficients $w_t$ of length L in the filter(s) 52, and generates an output signal $e_t = y_t - w_t^T \boldsymbol{x}_t$. The goal is to remove the received loudspeaker signal $\boldsymbol{w}_{\mathrm{OPT}}^T \boldsymbol{x}_t$ from $y_t$ to obtain a clean output $e_t \approx z_t$. Depending on context, we sometimes refer to $z_t$ as noise, and sometimes refer to it as the near-end signal.

The optimal filter coefficients are unknown, and an adaptive algorithm is used to find filter coefficients as close to optimal as possible.

The echo canceller 50 has saved, from a previous iteration, $P - 1$ previous loudspeaker and microphone measurements: $(\boldsymbol{x}_{t'}, y_{t'})$ for $t' = t - 2, ..., t - P$, and a previous estimate of the echo-channel's coefficients $\boldsymbol{w}_{t-1}$.

The adaptive echo canceler is defined by a function $f$ that defines new echo channel coefficients as the following:

$$\boldsymbol{w}_t = f(\boldsymbol{w}_{t-1}, \{y_s\}_{s=t-1}^{t-P}, \{\boldsymbol{x}_s\}_{s=t-1}^{t-P}, c_t),$$

where $c_t$ is a control parameter.

Notation is introduced for the history of length $P$ at time $t$:

$$X_{t,P} = [\mathbf{x}_t \quad \mathbf{x}_{t-1} \quad \cdots \quad \mathbf{x}_{t-P+1}],$$

and

$$\mathbf{y}_{t,P} = [y_t \quad y_{t-1} \quad \cdots \quad y_{t-P+1}]^T.$$

In this notation, the IML update formula (Eq. 1 above) can be described via the following equations:

$$V_{t,1} = X_{t,1} - X_{t-1,P-1}\left(X_{t-1,P-1}^T X_{t-1,P-1} + c_{t-P}^{-1}I\right)^{-1} X_{t-1,P-1}^T X_{t,1},$$

and

$$\mathbf{w}_{IML}^P(t) = \mathbf{w}_{IML}^P(t-1) + V_{t,1}\left(X_{t,1}^T V_{t,1} + c_{t-P}^{-1}I\right)^{-1}\left(y_{t,1} - X_{t,1}^T \mathbf{w}_{IML}^P(t-1)\right). \quad \text{Eq. 2}$$

As these equations show, the new filter coefficients $\mathbf{w}_{IML}^P(t)$ are obtained as a function of the previous estimate $\mathbf{w}_{IML}^P(t-1)$, the most recent microphone sample $y_{t,1}$, the last P loudspeaker vectors $X_{t,P} = [X_{t,1} X_{t-1,P-1}]$, and the confidence parameter $c_{t-P}$. For best performance, the confidence parameter should be set to an estimate of the ideal value

$$c_{t-P}^* = \frac{\|\mathbf{w}_{t-P} - \mathbf{w}_{OPT}\|^2}{L\sigma_z^2},$$

where $\sigma_z^2$ is the near-end signal power and $m_{t-P} = \|\mathbf{w}_{t-P} - \mathbf{w}_{OPT}\|^2/L$ is referred to as the misalignment. The value $c_t^*$ is unknown in practice, but can be estimated by methods described above.

Exemplary various embodiments are now described.

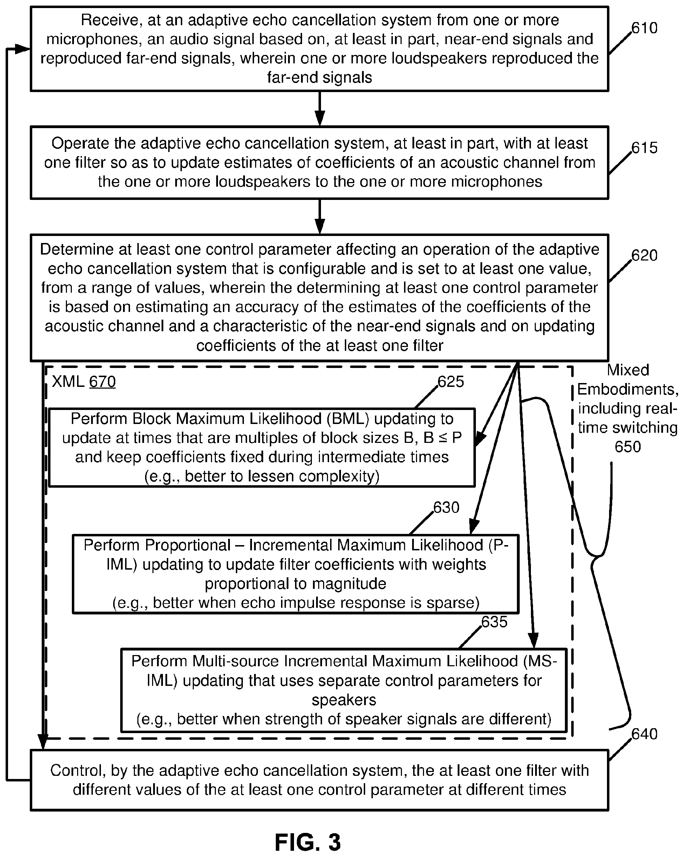

These exemplary embodiments are described with reference, in part, to FIG. 3, which is a logic flow diagram for acoustic echo cancellation using a control parameter and different maximum likelihood schemes. FIG. 3 also illustrates the operation of an exemplary method or methods, a result of execution of computer program instructions embodied on a computer readable memory, functions performed by logic implemented in hardware, and/or interconnected means for performing functions in accordance with exemplary embodiments. The blocks in FIG. 3 are assumed to be performed by apparatus 10, e.g., under control of the control module 140 and its corresponding AEC system 90.

In block 610, the AEC system 90 receives, from one or more microphones 30, an audio signal 30 based on, at least in part, near-end signals 40 and reproduced far-end signals 60, wherein one or more loudspeakers 12 reproduced the far-end signals 15. The AEC system 90 in block 615, is operated, at least in part, with at least one filter (e.g., filter(s) 52) so as to update estimates of coefficients (e.g., $w_t$) of an acoustic channel from the one or more loudspeakers 12 to the one or more microphones 30.

The AEC system 90 determines in block 620 at least one control parameter affecting an operation of the AEC system 90 that is configurable and is set to at least one value, from a range of values. The determining at least one control parameter is based on estimating an accuracy of the estimates of the coefficients of the acoustic channel and a characteristic of the near-end signals and on updating coefficients of the at least one filter. There are three major schemes for this: Block Maximum Likelihood (BML) update in block 625, which modifies timing of updates relative to the timing used in IML; a Proportional - Incremental Maximum Likelihood (P-IML) update in block 635, which modifies weighting used for the coefficients relative to weighting used in IML; and a Multi-source Incremental Maximum Likelihood (MS-IML) update in block 635, which uses separate control parameters for speakers instead of a single control parameter as used in IML.

Concerning Block Maximum Likelihood (BML) in block 625, for a given block size $1 < B \le P$, the block maximum likelihood update is defined as the following:

$$V_{nB,B} = X_{nB,B} - X_{nB-B,P-B}\left(X_{nB-B,P-B}^T X_{nB-B,P-B} + c_{nB-P}^{-1}I\right)^{-1} X_{nB-B,P-B}^T X_{nB,B},$$

and

$$w_{\text{BML}}^{B,P}(nB) = w_{\text{BML}}^{B,P}(nB - B) + V_{nB,B}\left(X_{nB,B}^T V_{nB,B} + c_{nB-P}^{-1}I\right)^{-1}\left(y_{nB,B} - X_{nB,B}^T w_{\text{BML}}^{B,P}(nB - B)\right).$$

$$\text{Eq. 3}$$

In this approach, the filter is updated only at times $t = nB$ that are integer multiples of the block size. The filter coefficients are kept fixed during intermediate times, i.e., we maintain $w_{\text{BML}}^{B,P}(nB + i) = w_{\text{BML}}^{B,P}(nB)$ for $i = 0, ..., B - 1$.

The technical strength of this algorithm is that it has reduced computational complexity compared with IML, assuming the same history parameter $P$. Larger P values are helpful when the loudspeaker signals are strongly correlated in time. In terms of dominant terms, the IML algorithm requires about $LP^2 + C(P - 1)^3$ operations per time sample, where $C$ is some constant associated with matrix inversion. The BML algorithm, with B=P, requires about $L(P + 1)^2 + CP^3$ operations per $P$ time samples, or $L(P + 1)^2/P + CP^2$ operations per time sample. Thus, BML can be significantly less complex for large P. In some implementations, the implementation complexity will be a non-trivial function of the parameters that depends on the particular hardware and software choices.

Other values of the block size B can have other technical advantages. For example, since the method requires one matrix inversion of size $P - B$ and one of size $B$, the maximum matrix inverse size is minimized for a given value of $P$ by using $B = P/2$, which can be useful for implementation. For example, since matrix inverses of size 2 have a simple closed form, the case $B = 2$, $P = 4$, is especially easy to implement.

Regarding Proportional Incremental Maximum Likelihood (P-IML) in block 630, in some applications, it is known or expected from physical principles that the true channel impulse response $w^*$ is sparse, i.e., that a large fraction of elements is equal to zero, or close enough to zero to have only a negligible effect on the received signal. A technical advantage is expected mainly when the fraction of near zero values is more than 50 percent of the total values.

There is an algorithm referred to as P-NLMS (proportionate normalized least mean square) that is similar to NLMS but obtains faster convergence when the channel impulse response is sparse. This method was described in (Dutweiler, Proportionate normalized least-mean-square adaptation in echo cancellers, IEEE Trans. Sig Proc, 2000). The essence of the method is that, after partial convergence, the estimates of zero or near-zero coefficients will be small and the estimates of large coefficients will be large. By making the step-size proportional to the magnitude of the current estimate, convergence of the non-zero coefficients is accelerated.

In the NLMS context, the method was essentially to define a diagonal $L \times L$ weight matrix $G(t)$ with tr($G$) = $L$, defined by $G_{t,kk} = \frac{L(|w_k(t)|+\Delta)}{L\Delta+\sum|w_n(t)|}$, where $\Delta > 0$ is a small regularization parameter. (There are additional details in the definition omitted here.) The P-NLMS update is defined as the following:

$$w(t) = w(t - 1) + \mu\frac{G_{t-1}x_t}{x_t^T x_t}(y_t - x_t^T w(t - 1)).$$

To similarly enhance convergence for the IML algorithm, the IML formula is modified by replacing the vector $X_{t,1}$ with the proportionally weighted vector $G_{t-1}X_{t,1}$.

This yields the P-IML algorithm as follows:

$$G_{t-1,kk} = \frac{L(|w_k(t)|+\Delta)}{L\Delta+\sum|w_n(t)|},$$

$$V_{t,1} = G_{t-1}X_{t,1} - G_{t-1}X_{t-1,P-1}\left(X_{t-1,P-1}^T G_{t-1}X_{t-1,P-1} + c_{t-P}^{-1}I\right)^{-1}X_{t-1,P-1}^T G_{t-1}X_{t,1},$$

$$w_{PIML}^P(t) = w_{PIML}^P(t - 1) + V_{t,1}\left(X_{t,1}^T V_{t,1} + c_{t-P}^{-1}I\right)^{-1}\left(y_{t,1} - X_{t,1}^T w_{PIML}^P(t - 1)\right).$$

This method has the technical advantage that it converges faster than IML when the channel is sparse. It also generally converges faster than P-NLMS, for the same reasons that IML converges faster than NLMS.

Concerning Multi-Source Incremental Maximum Likelihood (MS-IML) in block 635, to describe this embodiment, a model is introduced with two loudspeaker signals $x_t^{(1)}$ and $x_t^{(2)}$ being picked up by a single microphone after passing through channels 27 with respective impulse responses $w_{\text{OPT}}^{(1)}$ and $w_{\text{OPT}}^{(2)}$. The microphone signal is then the following:

$$y_t = x_t^{(1)T} w_{\text{OPT}}^{(1)} + x_t^{(2)T} w_{\text{OPT}}^{(2)} + z_t,$$

as one might obtain in the case of stereo loudspeakers being picked up by a single microphone. Here $x_t^{(k)} = \left[ x_t^{(k)}, \ldots, x_{t-L+1}^{(k)} \right]^T$ is the snapshot of the k-th loudspeaker signal.

Formally we can concatenate the two channels with the notation $x_t = \left[ x_t^{(1)T} \ x_t^{(2)T} \right]^T$ and

$w_{\text{OPT}} = \left[ w_{\text{OPT}}^{(1)T} \ w_{\text{OPT}}^{(2)T} \right]^T$, and obtain a model in the original form $y_t = x_t^T w_{\text{OPT}} + z_t$ .

An adaptive algorithm for the full system could be obtained by applying the IML (or BML, and the like) to this concatenated system. However, this does not work very well in general because the overall ideal control parameter

$$c_{t-P}^* = \frac{\|w_{t-P} - w_{\text{OPT}}\|^2}{(2L)\sigma_z^2},$$

can be very different from the ideal control parameters of each individual sub-filter, that is

$$c_{t-P}^{(k)*} = \frac{\left\| w_{t-P}^{(k)} - w_{\text{OPT}}^{(k)} \right\|^2}{L\sigma_z^2}.$$

For example, if the loudspeaker signal $x_t^{(1)}$ is much stronger than the loudspeaker signal $x_t^{(2)}$, then after some adaptation, the error in filter $w_t^{(1)}$ will be much smaller than the error in filter $w_t^{(2)}$, ideal confidence parameter $c_{t-P}^{(1)*}$ will be much smaller than $c_{t-P}^{(2)*}$, and the average parameter $c_{t-P}^*$ will not be optimal for the further convergence of either filter.

To overcome this problem, two separate control parameters $c_{t-P}^{(1)}$ and $c_{t-P}^{(2)}$ are used that are estimates of respective ideal parameters $c_{t-P}^{(1)*}$ and $c_{t-P}^{(2)*}$, and define $c_{t-P} = \frac{1}{2}\left( c_{t-P}^{(1)} + c_{t-P}^{(2)} \right)$

A diagonal weight matrix is defined as follows:

$$R_t = \begin{bmatrix} \frac{c_{t-P}^{(1)}}{c_{t-P}} I & 0 \\ 0 & \frac{c_{t-P}^{(2)}}{c_{t-P}} I \end{bmatrix},$$

and the IML update formula is updated by replacing $X_{t,1}$ with the weighted version $R_t X_{t,1}$. The multi-source incremental update algorithm is then as follows:

$$V_{t,1} = R_t \ X_{t,1} - R_t X_{t-1,P-1}\left(X_{t-1,P-1}^T R_t X_{t-1,P-1} + c_{t-P}^{-1} I\right)^{-1} X_{t-1,P-1}^T R_t X_{t,1},$$

and

$$w_{MS-IML}^{P}(t) = w_{MS-IML}^{P}(t-1) + V_{t,1}\left(X_{t,1}^{T}V_{t,1} + c_{t-P}^{-1}I\right)^{-1}\left(y_{t,1} - X_{t,1}^{T}w_{MS-IML}^{P}(t-1)\right).$$

In this reweighted version, fast convergence is achieved similar to the single source case.

These techniques generalize naturally to the case of $N$ parallel channels, by taking the weighting matrix

$$R_t = \begin{bmatrix} \frac{c_{t-P}^{(1)}}{c_{t-P}}I & \cdots & 0 \\ \vdots & \ddots & \vdots \\ 0 & \cdots & \frac{c_{t-P}^{(N)}}{c_{t-P}}I \end{bmatrix},$$

based on individual confidence parameters for each filter, together with the average confidence parameter $c_t = \frac{1}{N}\left(\sum_{k=1}^{N} c_t^{(k)}\right)$.

In block 640, the AEC system 90 controls the at least one filter 52 with different values of the at least one control parameter at different times. This may entail performing the process again by restarting at block 610.

Mixed embodiments 650 are now described. That is, it is possible to combine embodiments in various ways. For example, the proportional weight matrix $Gt$ used for P-IML could be incorporated into the BML or MS-IML to make proportional versions of these algorithms that converge faster on sparse channels. Likewise, in a multi-source scenario, one could incorporate the $Rt$ weighting matrix into the BML update equations to get a multi-source algorithm that updates on a block basis, with reduced complexity compared with MS-IML.

Furthermore, it is possible to switch in mixed embodiments 650 between some of these in real time. For instance, the AEC system 50 may start with normal IML, then switch to the BML based on a certain criterion, e.g., related to processing speed for the algorithm. For example, if the processing time (or power consumption) for the IML becomes what is deemed to be too long or take up too much of the overall processing capability (or power consumption), as determined by threshold(s), the system could switch to BML. The AEC system 50 could also start with IML then determine the acoustic echo impulse response is sparse, and switch to P-IML. The AEC system 50 could start with IML, determine power differences between speakers are "high" (e.g., above some threshold), and switch to MS-IML. All combinations of BML, P-IML, and MS-IML are possible.

Another example is to use IML when a new communication session is initializing or when a change in the acoustic environment is detected (since this is when convergence speed is most critical) and use BML otherwise (to save computational resources or power consumption).

In general, BML might be used if one wants to reduce complexity, P-IML if one has reason to believe the channel is sparse, MS-IML if there are multiple loudspeakers. Any combination of the above may be used if any combination of the reasons is present.

It is noted that, for MS-IML, advantages come into play when there are power differences between loudspeakers. Since in general one wants the system to work no matter what signals come over the loudspeakers, it would be useful to use MS-IML whenever multiple speakers are present so that the system is robust to power differences.

With respect to block 670, referred to under the heading of XML, it is possible to unify all of these under a single embodiment. Before proceeding with a description of unification, it is helpful to discuss how the P-IML and MS-IML may be considered to be related.

For P-IML and MS-IML, one common element is that the updates of different filter coefficients are weighted differently.

In the case of P-IML, the diagonal matrix $G_{t-1}$ appears on the left side of the definition of $V_{t,1}$, and hence effects differently the size of the update to different elements of $w_{PIML}^{P}(t-1)$.

In the case of MS-IML, the diagonal matrix $Rt$ appears on the left side of the definition of $V_{t,1}$, and hence effects differently the size of the update to different elements of $w_{MS-IML}^{P}(t-1)$.

In both cases, one can further say that the weights are not all identical to each other (otherwise the weights get back to IML) and that they somehow are proportional to an estimate of the error in the corresponding coefficients.

For MS-IML, this is clear; for the case of two loudspeakers, in the expression

$$R_t = \begin{bmatrix} \frac{c_{t-P}^{(1)}}{c_{t-P}} I & 0 \\ 0 & \frac{c_{t-P}^{(2)}}{c_{t-P}} I \end{bmatrix},$$

the weights in the top and bottom half of $R_t$ are related to different estimates of the error for the two filters, as represented by $c_{t-P}^{(1)}$ and $c_{t-P}^{(2)}$.

For P-IML, the weights in $G_{t-1}$ are proportional to the size of the coefficients $w_{t-1}$. In the case of a sparse channel, $|w_{t-1,k}|$ is being used as a rough estimate of the error in $w_{t-1,k}$, via the logic that for small coefficients, the true value is probably close to 0, and so the error is probably $|w_{t-1,k}|$. So then for the small coefficients, $G_{t-1}$ is proportional to an estimate of the error.

It can be seen that P-IML and MS-IML may be considered to be related. This also has effects for the single embodiment described below.

The single embodiment that covers the BML 625, P-IML 630 and MS-IML 635 is described now via an XML 650 embodiment.

A general formula applicable to all embodiments, which is referred to as XML is as follows. Compare with Eq. 2 and in particular Eq. 3 above.

$$V_{nB,B} = R_{nB} X_{nB,B} - R_{nB} X_{nB-B,P-B} \left( X_{nB-B,P-B}^T R_{nB} X_{nB-B,P-B} + c_{nB-P}^{-1} I \right)^{-1} X_{nB-B,P-B}^T R_{nB} X_{nB,B},$$

and

$$w_{\text{XML}}^{B,P}(nB) = w_{\text{XML}}^{B,P}(nB - B) + V_{nB,B} \left( X_{nB,B}^T V_{nB,B} + c_{nB-P}^{-1} I \right)^{-1} \left( y_{nB,B} - X_{nB,B}^T w_{\text{XML}}^{B,P}(nB - B) \right).$$

This is different from the BML formula (Eq. 3) only in that there is a matrix $R_{nB}$ added in four places to the formula for $V_{nB,B}$. Eight cases can be enumerated, as indicated by the following table.

| B > 1 | R depends on current filter coefficient size | R depends on which source the filter coefficient is associated with | Name | Properties |
|---|---|---|---|---|
| 0 | 0 | 0 | IML | algorithm described in U.S. Patent Application Serial Number 17/393,904, by inventors Carl Jeremy Nuzman and Shirin Jalali, filed on August 4, 2021 |
| 1 | 0 | 0 | BML | lower complexity |
| 0 | 1 | 0 | P-IML | converges faster for sparse channel |
| 0 | 0 | 1 | MS-IML | converges faster for multiple sources |
| 1 | 1 | 0 | P-BML | lower complexity and converges faster for sparse channels |
| 1 | 0 | 1 | MS-BML | lower complexity and converges faster for multiple sources |
| 0 | 1 | 1 | MS-P-IML | converges fastest for sparse channel and multiple sources |
| 1 | 1 | 1 | MS-P-BML | lower complexity and converges fastest for sparse channel and multiple sources |

There are also disadvantages associated with each feature, which is why any embodiment may be preferred over any other, depending on the application. Consider the following:

BML: can converge a little slower than without BML;

P-IML: if the channel is not sparse, can converge slower than without P-IML; and

MS-IML: is only applicable if there are multiple sources, and has additional complexity in estimating filter uncertainty separately for each source.

For the first column of the chart: if this column is 0, then B = 1, otherwise if this column is 1, then B > 1. This is a matter of updating the filter coefficients at every time sample, or blockwise, but may involve performing the updates correctly for near-optimal performance.

The second and third columns determine the definition of the matrix $R_{nB}$.

As noted, the second and third column are two variations of an idea, which is to make the weight of adaptation depend on an estimate of uncertainty in the filter coefficient. So those two columns can be united (as further described above with respect to the relationship between P-IML and MS-IML).

The four possible combinations of the second and third columns are given below.

00: $R_{nB} = I$. Identity matrix, no special weighting.

10: $R_{nB} = G(nB)$. A diagonal matrix $G(nB)$, whose entries are basically proportional to the magnitude of the current filter coefficients $w_{\mathrm{XML}}^{B,P}(nB - B)$. This is similar to the previously-described diagonal $L \times L$ weight matrix $G(t)$ with tr($G$) = $L$, defined by $G_{t,kk} = \frac{L(|w_k(t)| + \Delta)}{L\Delta + \sum |w_n(t)|}$, where $\Delta > 0$ is a small regularization parameter.

01:

$$R_{nB} = \begin{bmatrix} \frac{c_{nB-P}^{(1)}}{c_{nB-P}} I & 0 \\ 0 & \frac{c_{nB-P}^{(2)}}{c_{nB-P}} I \end{bmatrix},$$

which is a diagonal matrix with a submatrix for each source, where each submatrix is scaled by a factor $\frac{c_{nB-P}^{(i)}}{c_{nB-P}}$ capturing information about the estimated error in filter coefficients associated with that source.

11:

$$R_{nB} = \begin{bmatrix} \frac{c_{nB-P}^{(1)}}{c_{nB-P}} G(nB)^{(1)} & 0 \\ 0 & \frac{c_{nB-P}^{(2)}}{c_{nB-P}} G(nB)^{(2)} \end{bmatrix},$$

which is a diagonal matrix with a submatrix for each source, where each submatrix is scaled by a factor $\frac{c_{nB-P}^{(i)}}{c_{nB-P}}$ capturing information about the estimated error in filter coefficients associated with that source, and also by a diagonal matrix $G(nB)^{(i)}$, whose entries are essentially proportional to the magnitude of the current filter coefficients associated with that source.

Performance results are now described. Described are the results of various experiments that show the benefits of the various embodiments.

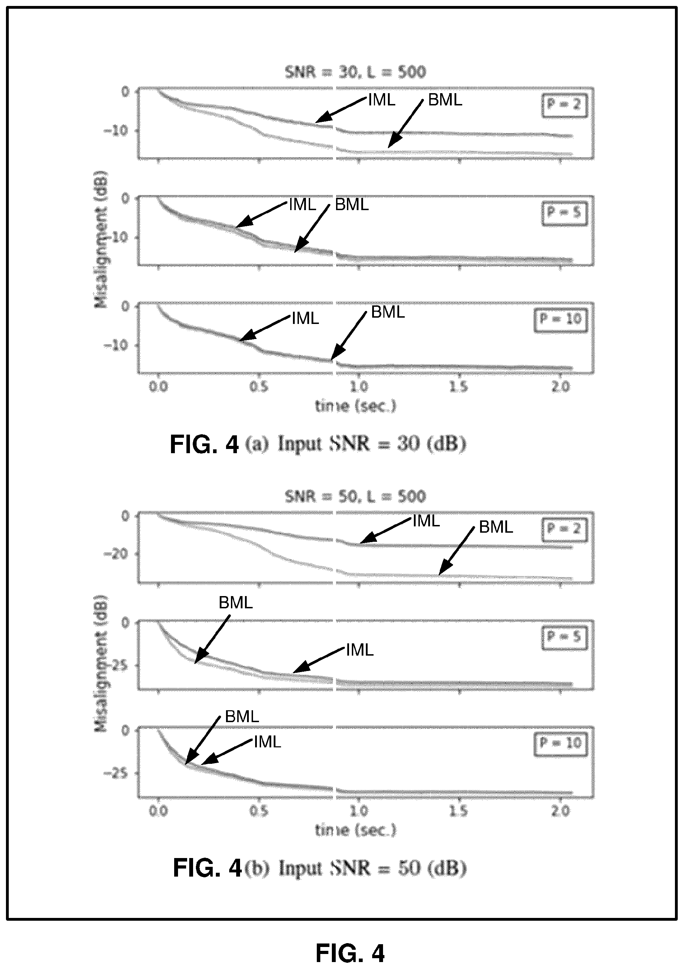

First, consider a comparison of BML and IML. FIG. 4, split into FIG. 4(a) and FIG. 4(b), shows the progress of the relative misalignment error $m_t/m_0 = \|w_t - w_{\mathrm{OPT}}\|^2 / \|w_{\mathrm{OPT}}\|^2$ as a function of time for some example scenarios. FIG. 4(a) illustrates input SNR that is 30 dB and FIG. 4(b) illustrates input SNR that is 50 dB. An adaptive filter of length $L$ = 500 is being used to remove echo from a simulated microphone signal, resulting from passing a recorded audio loudspeaker signal through a channel with impulse response length of 500 samples, and adding white noise. The ratio of loudspeaker signal to additive noise is 30 dB in FIG. 4(a) and 50 dB in FIG. 4(b) Memory levels of $P$ = 2, 5, and 10 are used. The performance of IML is plotted and marked, and the performance of Block ML method using block size $B = P$ is also plotted and marked. One can see that convergence speed improves with larger memory length $P$, as discussed in U.S. Patent Application Serial Number 17/393,904. It is also seen that the convergence speed of BML is slower than that of IML. However, for large values of $P$, BML is nearly as good as IML, while having significantly lower computational complexity. Thus, BML can be advantageous in this regime.

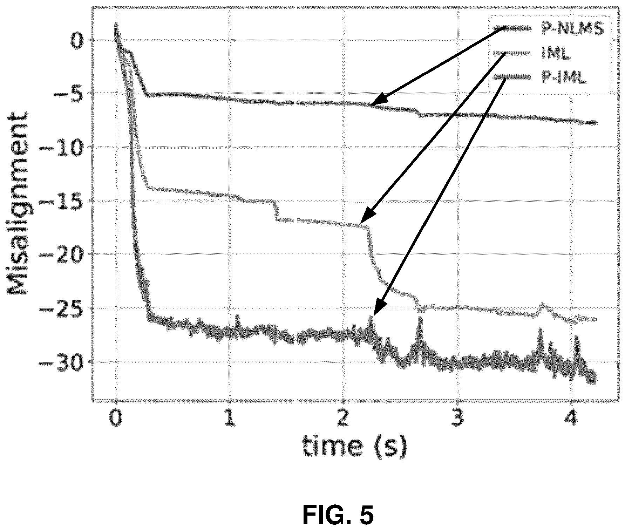

Consider next a comparison of IML and P-IML: FIG. 5 shows relative misalignment as a function of time for three adaptive algorithms, for a scenario that is qualitatively similar to the scenario shown in FIG. 5. In this scenario however, the channel impulse response is sparse, in the sense that only 10% of the L impulse response taps are non-zero. The blue curve shows the performance of the P-NLMS algorithm of (Dutweiler 2000), previously mentioned, with a fixed step size. The performance of the IML algorithm of U.S. Patent Application Serial Number 17/393,904 was generated with P = 8. The performance of the P-IML algorithm, an embodiment herein, was also generated with P = 8. Because P-NLMS takes advantage of sparsity, it converges faster than NLMS (not shown). But IML converges still faster because it is able to work more effectively with the strongly correlated input signal, and also because it continuously adapts the control parameter. The proportional version of IML, an embodiment herein, has even better performance because it is able to exploit the sparsity of the channel while still retaining the advantages of IML.

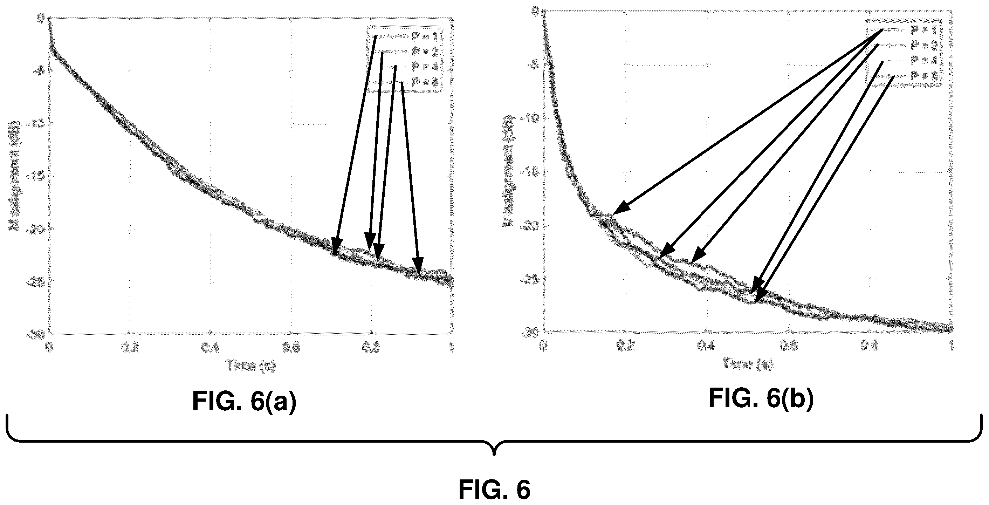

A third comparison is between IML and MS-IML. To illustrate the technical advantages of ML-IML in multi-loudspeaker situations, an experiment with two loudspeaker signals and one microphone is described. The channel impulse responses from each loudspeaker to the microphone are of similar strength, but the transmitted signal strength from the second loudspeaker is 1/10 the power of the first loudspeaker. The loudspeaker signals are both white noise, independent of each other. FIG. 6, split into FIGS. 6(a) and 6(b), illustrate relative misalignment as a function of time in a echo cancellation system with two loudspeakers and one microphone, and with unequal loudspeaker signal powers, where FIG. 6(a) uses IML, and FIG. 6(b) uses MS-IML; FIG. 6(a) shows the progress of relative misalignment when using IML to adapt the filter coefficients, with memory values $P = \{1,2,4,8\}$. Convergence is initially rapid, until about -4 dB, after which the convergence slows considerably. Root cause analysis shows that the cause is effectively that the control parameter tuned to the overall misalignment is too high for one filter and too low for the other filter.

FIG. 6(b) shows the progress of the relative misalignment when using MS-IML, with a separate control parameter for each filter. In this case, the convergence is rapid and in-line with performance seen in single-source scenarios. For example, with IML it takes about 0.6 seconds to reach -20 dB relative misalignment, while with MS-IML, this level is reached in less than 0.2 seconds.

As used in this application, the term "circuitry" may refer to one or more or all of the following:

(a) hardware-only circuit implementations (such as implementations in only analog and/or digital circuitry) and
(b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Embodiments herein may be implemented in software (executed by one or more processors), hardware (e.g., an application specific integrated circuit), or a combination of software and hardware. In an example embodiment, the software (e.g., application logic, an instruction set) is maintained on any one of various conventional computer-readable media. In the context of this document, a "computer-readable medium" may be any media or means that can contain, store, communicate, propagate or transport the instructions for use by or in connection with an instruction execution system, apparatus, or device, such as a computer, with one example of a computer described and depicted, e.g., in FIG. 1A. A computer-readable medium may comprise a computer-readable storage medium (e.g., memories 125 or other device) that may be any media or means that can contain, store, and/or transport the instructions for use by or in connection with an instruction execution system, apparatus, or device, such as a computer. A computer-readable storage medium does not comprise propagating signals.

The following abbreviations that may be found in the specification and/or the drawing figures are defined as follows:

| | |
|---|---|
| 5G | fifth generation |
| AEC | Acoustic Echo Cancellation or Acoustic Echo Canceller |
| APA | Affine Projection Algorithm |
| BML | Block Maximum Likelihood |
| CP | Confidence Parameter |
| IML | Incremental Maximum Likelihood |
| LMS | Least Mean Square |
| Mic | microphone |
| ML | Maximum Likelihood |
| MLE | Maximum Likelihood Estimation |
| MS-BML | Multi-Source Block Maximum Likelihood |
| MS-IML | Multi-Source Incremental Maximum Likelihood |
| MS-P-BML | Multi-Source Proportional -- Block Maximum Likelihood |
| MS-P-IML | Multi-Source Proportional - Incremental Maximum Likelihood |
| NLMS | Normalized Least Mean Square |
| P-IML | Proportional - Incremental Maximum Likelihood |
| P-NLMS | proportionate normalized least mean square |
| R-APA | Regularized Affine Projection Algorithm |
| RLS | Recursive Least Square |
| s | seconds |
| SNR | signal to noise ratio |
| XML | A general ML formula encompassing BML, P-IML, and MS-IML |

**Claims**

1. A method for echo cancellation of a two-way audio communication, comprising:

   receiving (610), at an adaptive echo cancellation system (90) from one or more microphones (30), an audio signal based on, at least in part, near-end signals (45) and reproduced far-end signals (60), wherein one or more loudspeakers (12) reproduced the far-end signals (11), and the audio signal comprises a sequence of samples;
   operating (615) the adaptive echo cancellation system (90), at least in part, with at least one filter (52) so as to update estimates of coefficients of an acoustic channel from the one or more loudspeakers (12) to the one or more microphones (30);
   determining (620) at least two control parameters affecting an operation of the adaptive echo cancellation system (90) that are configurable and are set to corresponding at least one value, wherein the determining the at least two control parameters is based on estimating an accuracy of the estimates of the coefficients of the acoustic channel, and on updating the coefficients of the at least one filter (52) based on an associated subset of samples from the sequence, where the associated subset of samples includes at least two samples not included in any subsets of samples associated with a previous update of the coefficients of the filter (52); and
   controlling (640), by the adaptive echo cancellation system (90), the at least one filter (52) with different values of the at least two control parameters at different times, wherein the at least two control parameters comprise a control parameter that affects a rate of change of corresponding estimates of coefficients of the acoustic channel and comprise a control parameter based on updating different filter coefficients with corresponding weights proportional to their magnitudes.

2. The method according to claim 1, wherein multiple loudspeakers (12) reproduced the far-end signals (11), and wherein the acoustic channel comprises multiple subchannels, each associated with a different one of the multiple loudspeakers (12), and each of the at least two control parameters corresponds to one of the multiple subchannels.

3. The method according to any of claims 1 or 2, wherein the associated subset of samples is a block of samples and subsets of samples in previous updates are corresponding blocks of samples, the blocks have a same number of samples, updating the coefficients of the at least one filter (52) occurs at multiples of the number of samples in the block, and the coefficients of the at least one filter (52) are kept fixed during times between when blocks are used for the updating.

4. An apparatus for echo cancellation of a two-way audio communication, comprising:

   one or more processors; and

one or more memories including computer program code,

wherein the one or more memories and the computer program code are configured, with the one or more processors, to cause the apparatus to:

receive, at an adaptive echo cancellation system (90) from one or more microphones (30), an audio signal based on, at least in part, near-end signals (45) and reproduced far-end signals (60), wherein one or more loudspeakers (12) reproduced the far-end signals (11), and the audio signal comprises a sequence of samples;

operate the adaptive echo cancellation system (90), at least in part, with at least one filter (52) so as to update estimates of coefficients of an acoustic channel from the one or more loudspeakers (12) to the one or more microphones (30);

determine at least two control parameters affecting an operation of the adaptive echo cancellation system (90) that are configurable and are set to corresponding at least one value, wherein the determining at least two control parameters is based on estimating an accuracy of the estimates of the coefficients of the acoustic channel, and on updating the coefficients of the at least one filter based on an associated subset of samples from the sequence, where the associated subset of samples includes at least two samples not included in any subsets of samples associated with a previous update of the coefficients of the filter; and

control, by the adaptive echo cancellation system, the at least one filter with different values of the at least two control parameters at different times, wherein the at least two control parameters comprise a control parameter that affects a rate of change of corresponding estimates of coefficients of the acoustic channel and comprise a control parameter based on updating different filter coefficients with corresponding weights proportional to their magnitudes.

5. The apparatus according to claim 4, wherein the associated subset of samples is a block of samples and subsets of samples in previous updates are corresponding blocks of samples, the blocks having at least two samples and less than a number of samples in the sequence of samples.

6. The apparatus according to claim 5, wherein updates are performed every block of samples of the audio signal.

7. The apparatus according to claim 6, wherein the blocks have a same number of samples, updating the coefficients of the at least one filter occurs at multiples of the number of samples in the block, and the coefficients of the at least one filter are kept fixed during times between when blocks are used for the updating.

8. The apparatus according to any of claims 4 to 7, wherein:

the determining and controlling are for a first procedure;

a second procedure has at least two control parameters comprising a control parameter that affects a rate of change of corresponding estimates of coefficients of the acoustic channel and comprising a control parameter based on updating different filter coefficients with corresponding weights proportional to their magnitude and the controlling, by the adaptive echo cancellation system, the at least one filter with different values of the at least one control parameter at different times controls the at least one filter with different values of the at least two control parameters at different times; and

the one or more memories and the computer program code are further configured, with the one or more processors, to cause the apparatus to choose, based on one or more criteria, whether to use the first procedure or second procedure for a time period.

9. The apparatus according to claim 8, wherein:
for the first and second procedures, multiple loudspeakers (12) reproduced the far-end signals (11), the acoustic channel comprises multiple subchannels, each associated with a different one of the multiple loudspeakers (12), and each of the at least two control parameters corresponding to one of the multiple subchannels.

10. The apparatus according to any of claims 4 to 9, wherein:
multiple loudspeakers (12) reproduced the far-end signals (11), the acoustic channel comprises multiple subchannels, each associated with a different one of the multiple loudspeakers (12), each of the at least two control parameters corresponding to one of the multiple subchannels.

11. The apparatus according to claim 4, wherein the estimated accuracy of the estimates for the control parameter based on updating different filter coefficients with corresponding weights proportional to their magnitudes comprises an estimate of the accuracy of a coefficient where a small coefficient is considered to be accurate while a large coefficient is considered not to be as accurate.

12. The apparatus according to claim 11, wherein the acoustic channel is sparse.

13. The apparatus according to any of claims 4 to 12, wherein multiple loudspeakers reproduced the far-end signals, and wherein the acoustic channel comprises multiple subchannels, each associated with a different one of the multiple loudspeakers (12), and each of the at least two control parameters corresponds to one of the multiple subchannels.

**Patentansprüche**

1. Verfahren zur Echounterdrückung bei einer Zweiwegeaudiokommunikation, das Folgendes umfasst:

   Empfangen (610) eines Audiosignals mindestens teilweise auf Basis von Signalen am nahen Ende (45) und reproduzierten Signalen am fernen Ende (60) an einem adaptiven Echounterdrückungssystem (90) von einem oder mehreren Mikrofonen (30), wobei ein oder mehrere Lautsprecher (12) die Signale (11) vom fernen Ende reproduziert haben und das Audiosignal eine Folge von Abtastwerten umfasst;
   Betreiben (615) des adaptiven Echounterdrückungssystems (90) mindestens teilweise mit mindestens einem Filter (52), um Schätzungen von Koeffizienten eines akustischen Kanals von dem einen oder den mehreren Lautsprechern (12) zu dem einen oder den mehreren Mikrofonen (30) zu aktualisieren;
   Bestimmen (620) von mindestens zwei Steuerparametern, die einen Betrieb des adaptiven Echounterdrückungssystems (90) beeinträchtigen, auslegbar sind und derart eingestellt sind, dass sie mindestens einem Wert entsprechen, wobei
   das Bestimmen, der mindestens zwei Steuerparameter auf dem Schätzen einer Genauigkeit der Schätzungen der Koeffizienten des akustischen Kanals basiert sowie auf dem Aktualisieren der Koeffizienten des mindestens einen Filters (52) auf Basis eines verknüpften Untersatzes von Abtastwerten aus der Folge, wobei der verknüpfte Untersatz von Abtastwerten mindestens zwei Abtastwerte beinhaltet, die nicht in Untersätzen von Abtastwerten beinhaltet sind, die mit einer vorherigen Aktualisierung der Koeffizienten des Filters (52) verknüpft sind; und
   Steuern (640) des mindestens einen Filters (52) durch das adaptive Echounterdrückungssystem (90) mit verschiedenen Werten der mindestens zwei Steuerparameter zu verschiedenen Zeiten, wobei die mindestens zwei Steuerparameter einen Steuerparameter umfassen, der eine Änderungsrate von entsprechenden Schätzungen von Koeffizienten des akustischen Kanals beeinträchtigt, sowie einen Steuerparameter umfasst, der auf dem Aktualisieren von verschiedenen Filterkoeffizienten mit entsprechenden Gewichtungen proportional zu deren Größe basiert.

2. Verfahren nach Anspruch 1, wobei mehrere Lautsprecher (12) die Signale (11) am fernen Ende reproduziert haben und wobei der akustische Kanal mehrere Unterkanäle umfasst, von denen jeder mit einem anderen der mehreren Lautsprecher (12) verknüpft ist, und jeder der mindestens zwei Steuerparameter einem der mehreren Unterkanäle entspricht.

3. Verfahren nach einem der Ansprüche 1 oder 2, wobei der verknüpfte Untersatz von Abtastwerten ein Block von Abtastwerten ist und Untersätze von Abtastwerten in vorherigen Aktualisierungen Blöcken von Abtastwerten entsprechen, die Blöcke eine selbe Anzahl von Abtastwerten umfassen, das Aktualisieren der Koeffizienten des mindestens einen Filters (52) an Vielfachen der Anzahl von Abtastungen in dem Block erfolgt und die Koeffizienten des mindestens einen Filters (52) während Zeiten, zwischen denen Blöcke für das Aktualisieren verwendet werden, fest gehalten werden.

4. Einrichtung zur Echounterdrückung bei einer Zweiwegeaudiokommunikation, die Folgendes umfasst:

   einen oder mehrere Prozessoren; und
   einen oder mehrere Speicher, die Computerprogrammcode beinhalten,
   wobei der eine oder die mehreren Speicher und der Computerprogrammcode dazu ausgelegt sind, die Einrichtung mit dem einen oder den mehreren Prozessoren zu Folgendem zu veranlassen:

   Empfangen eines Audiosignals mindestens teilweise auf Basis von Signalen am nahen Ende (45) und reproduzierten Signalen am fernen Ende (60) an einem adaptiven Echounterdrückungssystem (90) von einem oder mehreren Mikrofonen (30), wobei ein oder mehrere Lautsprecher (12) die Signale (11) vom fernen Ende reproduziert haben und das Audiosignal eine Folge von Abtastwerten umfasst;

Betreiben des adaptiven Echounterdrückungssystems (90) mindestens teilweise mit mindestens einem Filter (52), um Schätzungen von Koeffizienten eines akustischen Kanals von dem einen oder den mehreren Lautsprechern (12) zu dem einen oder den mehreren Mikrofonen (30) zu aktualisieren;

Bestimmen von mindestens zwei Steuerparametern, die einen Betrieb des adaptiven Echounterdrückungssystems (90) beeinträchtigen, auslegbar sind und derart eingestellt sind, dass sie mindestens einem Wert entsprechen, wobei

das Bestimmen von mindestens zwei Steuerparametern auf dem Schätzen einer Genauigkeit der Schätzungen der Koeffizienten des akustischen Kanals basiert sowie auf dem Aktualisieren der Koeffizienten des mindestens einen Filters auf Basis eines verknüpften Untersatzes von Abtastwerten aus der Folge, wobei der verknüpfte Untersatz von Abtastwerten mindestens zwei Abtastwerte beinhaltet, die nicht in Untersätzen von Abtastwerten beinhaltet sind, die mit einer vorherigen Aktualisierung der Koeffizienten des Filters verknüpft sind; und

Steuern des mindestens einen Filters durch das adaptive Echounterdrückungssystem mit verschiedenen Werten der mindestens zwei Steuerparameter zu verschiedenen Zeiten, wobei die mindestens zwei Steuerparameter einen Steuerparameter umfassen, der eine Änderungsrate von entsprechenden Schätzungen von Koeffizienten des akustischen Kanals beeinträchtigt, sowie einen Steuerparameter umfasst, der auf dem Aktualisieren von verschiedenen Filterkoeffizienten mit entsprechenden Gewichtungen proportional zu deren Größe basiert.

5. Einrichtung nach Anspruch 4, wobei der verknüpfte Untersatz von Abtastwerten ein Block von Abtastwerten ist und Untersätze von Abtastwerten in vorherigen Aktualisierungen entsprechende Blöcke von Abtastwerten sind, wobei die Blöcke mindestens zwei Abtastwerte und weniger als eine Anzahl von Abtastwerten in der Folge von Abtastwerten aufweisen.

6. Einrichtung nach Anspruch 5, wobei Aktualisierungen an jedem Block von Abtastwerten des Audiosignals durchgeführt werden.

7. Einrichtung nach Anspruch 6, wobei die Blöcke eine selbe Anzahl von Abtastwerten aufweisen, das Aktualisieren der Koeffizienten des mindestens einen Filters bei Vielfachen der Anzahl von Abtastwerten im Block erfolgt und die Koeffizienten des mindestens einen Filters während Zeiten, zwischen denen Blöcke für das Aktualisieren verwendet werden, fest gehalten werden.

8. Einrichtung nach einem der Ansprüche 4 bis 7, wobei:

das Bestimmen und Steuern für eine erste Prozedur sind;

eine zweite Prozedur mindestens zwei Steuerparameter aufweist, die einen Steuerparameter umfassen, der eine Änderungsrate von entsprechenden Schätzungen von Koeffizienten des akustischen Kanals beeinträchtigt, sowie einen Steuerparameter umfasst, der auf dem Aktualisieren von verschiedenen Filterkoeffizienten mit entsprechenden Gewichtungen basiert, die sich proportional zu deren Größe verhalten, und das Steuern des mindestens einen Filters mit verschiedenen Werten des mindestens einen Steuerparameters zu verschiedenen Zeiten durch das adaptive Echounterdrückungssystem das mindestens eine Filter mit verschiedenen Werten der mindestens zwei Steuerparameter zu verschiedenen Zeiten steuert; und

der eine oder die mehreren Speicher und der Computerprogrammcode ferner dazu ausgelegt sind, die Einrichtung mit dem einen oder den mehreren Prozessoren zu veranlassen, auf Basis von einem oder mehreren Kriterien zu wählen, die erste Prozedur oder die zweite Prozedur für eine Zeitperiode zu verwenden.

9. Einrichtung nach Anspruch 8, wobei:

für die erste und die zweite Prozedur mehrere Lautsprecher (12) die Signale (11) am fernen Ende reproduziert haben, der akustische Kanal mehrere Unterkanäle umfasst, von denen jeder mit einem anderen der mehreren Lautsprecher (12) verknüpft ist, und jeder der mindestens zwei Steuerparameter einem der mehreren Unterkanäle entspricht.

10. Einrichtung nach einem der Ansprüche 4 bis 9, wobei:

mehrere Lautsprecher (12) die Signale (11) am fernen Ende reproduziert haben, der akustische Kanal mehrere Unterkanäle umfasst und jeder mit einem anderen der mehreren Lautsprecher (12) verknüpft ist und jeder der mindestens zwei Steuerparameter einem der mehreren Unterkanäle entspricht.

11. Einrichtung nach Anspruch 4, wobei die geschätzte Genauigkeit der Schätzungen für den Steuerparameter auf Basis des Aktualisierens von verschiedenen Filterkoeffizienten mit entsprechenden Gewichtungen, die sich proportional zu deren Größen verhalten, eine Schätzung der Genauigkeit eines Koeffizienten umfasst, wo ein kleiner Koeffizient als genau gilt, während ein großer Koeffizient nicht als genau gilt.

12. Einrichtung nach Anspruch 11, wobei der akustische Kanal spärlich ist.

13. Einrichtung nach einem der Ansprüche 4 bis 12, wobei die mehreren Lautsprecher die Signale am fernen Ende reproduziert haben und wobei der akustische Kanal mehrere Unterkanäle umfasst, von denen jeder mit einem anderen der mehreren Lautsprecher (12) verknüpft ist, und jeder der mindestens zwei Steuerparameter einem der mehreren Unterkanäle entspricht.

**Revendications**

1. Procédé d'annulation d'écho d'une communication audio bidirectionnelle, comprenant les étapes suivantes :

au niveau d'un système d'annulation d'écho adaptatif (90), recevoir (610) d'un ou plusieurs microphones (30) un signal audio basé au moins en partie sur des signaux locaux (45) et des signaux distants (60) reproduits, dans lequel un ou plusieurs haut-parleurs (12) ont reproduit les signaux distants (11), et le signal audio comprend une séquence d'échantillons ;
faire fonctionner (615) le système d'annulation d'écho adaptatif (90) au moins en partie avec au moins un filtre (52) de manière à mettre à jour des estimations de coefficients d'un canal acoustique allant des un ou plusieurs haut-parleurs (12) aux un ou plusieurs microphones (30) ;
déterminer (620) au moins deux paramètres de commande affectant un fonctionnement du système d'annulation d'écho adaptatif (90) qui sont configurables et réglés sur au moins une valeur correspondante, dans lequel la détermination des au moins deux paramètres de commande est basée sur l'estimation d'une précision des estimations des coefficients du canal acoustique et sur la mise à jour des coefficients de l'au moins un filtre (52) en fonction d'un sous-ensemble d'échantillons associé provenant de la séquence, où le sous-ensemble d'échantillons associé comporte au moins deux échantillons qui ne sont inclus dans aucun des sous-ensembles d'échantillons associés à une mise à jour précédente des coefficients du filtre (52) ; et
par le système d'annulation d'écho adaptatif (90), commander (640) l'au moins un filtre (52) avec différentes valeurs des au moins deux paramètres de commande à différents moments, dans lequel les au moins deux paramètres de commande comprennent un paramètre de commande qui affecte un taux de changement d'estimations de coefficients correspondantes du canal acoustique et comprennent un paramètre de commande basé sur une mise à jour de différents coefficients avec des poids correspondants proportionnels à leurs amplitudes.

2. Procédé selon la revendication 1, dans lequel de multiples haut-parleurs (12) ont reproduit les signaux distants (11), et dans lequel le canal acoustique comprend de multiples sous-canaux chacun associé à un haut-parleur différent des multiples haut-parleurs (12), et chacun des au moins deux paramètres de commande correspond à l'un des multiples sous-canaux.

3. Procédé selon l'une des revendications 1 ou 2, dans lequel le sous-ensemble d'échantillons associé est un bloc d'échantillons, et des sous-ensembles d'échantillons dans des mises à jour précédentes sont des blocs d'échantillons correspondants, les blocs ont un même nombre d'échantillons, la mise à jour des coefficients de l'au moins un filtre (52) se produit à de multiples échantillons de ces échantillons dans le bloc, et les coefficients de l'au moins un filtre (52) sont maintenus fixes entre les utilisations des blocs pour la mise à jour.

4. Appareil d'annulation d'écho d'une communication audio bidirectionnelle, comprenant :

un ou plusieurs processeurs ; et
une ou plusieurs mémoires comportant un code de programme informatique,
dans lequel les une ou plusieurs mémoires et le code de programme informatique sont configurés, avec les un ou plusieurs processeurs, pour amener l'appareil à :

au niveau d'un système d'annulation d'écho adaptatif (90), recevoir d'un ou plusieurs microphones (30) un signal audio basé au moins en partie sur des signaux locaux (45) et des signaux distants (60) reproduits, dans lequel un ou plusieurs haut-parleurs (12) ont reproduit les signaux distants (11), et le signal audio comprend une séquence d'échantillons ;

faire fonctionner le système d'annulation d'écho adaptatif (90) au moins en partie avec au moins un filtre (52) de manière à mettre à jour des estimations de coefficients d'un canal acoustique allant des un ou plusieurs haut-parleurs (12) aux un ou plusieurs microphones (30) ;

déterminer au moins deux paramètres de commande affectant un fonctionnement du système d'annulation d'écho adaptatif (90) qui sont configurables et réglés sur au moins une valeur correspondante, dans lequel la détermination des au moins deux paramètres de commande est basée sur l'estimation d'une précision des estimations des coefficients du canal acoustique et sur la mise à jour des coefficients de l'au moins un filtre en fonction d'un sous-ensemble d'échantillons associé provenant de la séquence, où le sous-ensemble d'échantillons associé comporte au moins deux échantillons qui ne sont inclus dans aucun des sous-ensembles d'échantillons associés à une mise à jour précédente des coefficients du filtre ; et

par le système d'annulation d'écho adaptatif, commander l'au moins un filtre avec différentes valeurs des au moins deux paramètres de commande à différents moments, dans lequel les au moins deux paramètres de commande comprennent un paramètre de commande qui affecte un taux de changement d'estimations de coefficients correspondantes du canal acoustique et comprennent un paramètre de commande basé sur une mise à jour de différents coefficients avec des poids correspondants proportionnels à leurs amplitudes.

5. Appareil selon la revendication 4, dans lequel le sous-ensemble d'échantillons associé est un bloc d'échantillons, et des sous-ensembles d'échantillons dans des mises à jour précédentes sont des blocs d'échantillons correspondants, les blocs ayant au moins deux échantillons et moins d'un certain nombre d'échantillons dans la séquence d'échantillons.

6. Appareil selon la revendication 5, dans lequel des mises à jour sont effectuées à chaque bloc d'échantillons du signal audio.

7. Appareil selon la revendication 6, dans lequel les blocs ont un même nombre d'échantillons, la mise à jour des coefficients de l'au moins un filtre se produit à de multiples échantillons de ces échantillons dans le bloc, et les coefficients de l'au moins un filtre sont maintenus fixes entre les utilisations des blocs pour la mise à jour.

8. Appareil selon l'une des revendications 4 à 7, dans lequel :

la détermination et la commande sont destinées à une première procédure ;

une deuxième procédure a au moins deux paramètres de commande comprenant un paramètre de commande qui affecte un taux de changement d'estimations de coefficients correspondantes du canal acoustique et comprenant un paramètre de commande basé sur une mise à jour de différents coefficients avec des poids correspondants proportionnels à leurs amplitudes, et la commande de l'au moins un filtre par le système d'annulation d'écho adaptatif avec différentes valeurs de l'au moins un paramètre de commande à différents moments commande l'au moins un filtre avec différentes valeurs des au moins deux paramètres de commande à différents moments ; et

les une ou plusieurs mémoires et le code de programme informatique sont en outre configurés, avec les un ou plusieurs processeurs, pour, sur la base d'un ou plusieurs critères, amener l'appareil à choisir entre l'utilisation de la première procédure et l'utilisation de la deuxième procédure pendant une période de temps.

9. Appareil selon la revendication 8, dans lequel :
pour les première et deuxième procédures, de multiples haut-parleurs (12) ont reproduit les signaux distants (11), le canal acoustique comprend de multiples sous-canaux chacun associé à un haut-parleur différent des multiples haut-parleurs (12), et chacun des au moins deux paramètres de commande correspond à l'un des multiples sous-canaux.

10. Appareil selon l'une des revendications 4 à 9, dans lequel :
de multiples haut-parleurs (12) ont reproduit les signaux distants (11), le canal acoustique comprend de multiples sous-canaux chacun associé à un haut-parleur différent des multiples haut-parleurs (12), chacun des au moins deux paramètres de commande correspond à l'un des multiples sous-canaux.

11. Appareil selon la revendication 4, dans lequel la précision estimée des estimations pour le paramètre de commande basé sur une mise à jour de différents coefficients avec des poids correspondants proportionnels à leurs amplitudes comprend une estimation de la précision d'un coefficient où un petit coefficient est considéré comme étant précis tandis qu'un grand coefficient est considéré comme n'étant pas précis.

**12.** Appareil selon la revendication 11, dans lequel le canal acoustique est clairsemé.

**13.** Appareil selon l'une des revendications 4 à 12, dans lequel de multiples haut-parleurs ont reproduit les signaux distants, et dans lequel le canal acoustique comprend de multiples sous-canaux chacun associé à un haut-parleur différent des multiples haut-parleurs (12), et chacun des au moins deux paramètres de commande correspond à l'un des multiples sous-canaux.

**FIG. 1**

**FIG. 1A**

EP 4 280 583 B1

Receive input signals from loudspeaker and microphone and VAD    /210

Compute confidence parameter    /220

Compute (IML) echo cancellation filter's output    /230

Update echo filter's weights    /240

# FIG. 2

Receive, at an adaptive echo cancellation system from one or more microphones, an audio signal based on, at least in part, near-end signals and reproduced far-end signals, wherein one or more loudspeakers reproduced the far-end signals  `610`

Operate the adaptive echo cancellation system, at least in part, with at least one filter so as to update estimates of coefficients of an acoustic channel from the one or more loudspeakers to the one or more microphones  `615`

Determine at least one control parameter affecting an operation of the adaptive echo cancellation system that is configurable and is set to at least one value, from a range of values, wherein the determining at least one control parameter is based on estimating an accuracy of the estimates of the coefficients of the acoustic channel and a characteristic of the near-end signals and on updating coefficients of the at least one filter  `620`

XML 670   `625`

Perform Block Maximum Likelihood (BML) updating to update at times that are multiples of block sizes B, B ≤ P and keep coefficients fixed during intermediate times (e.g., better to lessen complexity)

`630`

Perform Proportional – Incremental Maximum Likelihood (P-IML) updating to update filter coefficients with weights proportional to magnitude (e.g., better when echo impulse response is sparse)

`635`

Perform Multi-source Incremental Maximum Likelihood (MS-IML) updating that uses separate control parameters for speakers (e.g., better when strength of speaker signals are different)

Mixed Embodiments, including real-time switching 650

`640`

Control, by the adaptive echo cancellation system, the at least one filter with different values of the at least one control parameter at different times

## FIG. 3

FIG. 4 (a) Input SNR = 30 (dB)

FIG. 4 (b) Input SNR = 50 (dB)

FIG. 4

**FIG. 5**

FIG. 6(a)

FIG. 6(b)

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2006018459 A
- US 2010057454 A

- US 39390421
- US 393904

### Non-patent literature cited in the description

- Proportionate normalized least-mean-square adaptation in echo cancellers. *IEEE Trans. Sig Proc*, 2000

- **DUTWEILER**. Proportionate normalized least-mean-square adaptation in echo cancellers. *IEEE Trans. Sig Proc*, 2000